# FASCICULE DE BREVET EUROPEEN

(11) **EP 0 489 621 B1**
(45) Date de publication et mention de la délivrance du brevet: **02.08.1995**
(21) Numéro de dépôt: 91403192.7
(22) Date de dépôt: 26.11.1991
(51) Int. Cl.: C03C 17/00, C03C 17/34, C03C 17/23

(54) **Procédé de formation d'une couche à base d'oxyde d'aluminium sur du verre, produit obtenu et son utilisation dans des vitrages à couche conductrice**
Verfahren zur Herstellung einer Aluminiumoxidschicht auf Glas, so erhaltenes Produkt und seine Verwendung in Scheiben mit leitender Schicht
Process of making an alumina layer on glass, product obtained and its use in glazings with conducting layer

(30) Priorité: 06.12.1990 FR 9015277
(43) Date de publication de la demande: 10.06.1992
(73) Titulaire: SAINT-GOBAIN VITRAGE, 92400 Courbevoie (FR)
(72) Inventeur: Zagdoun, Georges, F-92250 La Garenne Colombes (FR); Trouve, Maurice, F-77140 Nemours (FR); Pegouret, Jean, F-75013 Paris (FR)
(74) Mandataire: Muller, René

(56) Documents cités:
- EP-A- 0 041 010
- EP-A- 0 192 009
- FR-A- 2 317 241
- GB-A- 950 533

## Description

La présente invention concerne un procédé pour former sur un support de verre, une couche à base d'oxyde d'aluminium. Elle concerne en particulier une couche d'oxyde d'aluminium associé à un autre oxyde du type oxyde de zinc, oxyde d'étain, oxyde de titane et/ou oxyde d'indium ; elle concerne aussi un verre portant cette couche ainsi que son utilisation, en particulier, dans des vitrages comprenant une mince couche transparente conductrice d'oxyde métallique, utilisables dans le bâtiment ou dans l'automobile.

Des vitrages destinés aux bâtiments sont avantageusement constitués en verre silico-sodo-calcique clair qui présente des facteurs de transmission lumineuse et énergétique élevés, par exemple proches de 90 % pour une épaisseur de 4 mm. Pour améliorer le confort des utilisateurs, notamment en hiver, en réduisant la perte énergétique due à une fuite de calories de l'intérieur du bâtiment vers l'extérieur, il est connu de constituer un vitrage en recouvrant une face d'une feuille de verre d'une couche conductrice d'oxyde métallique, dite de basse émissivité, qui accroît le taux de réflexion du vitrage dans l'infra-rouge. Un vitrage en verre revêtu d'une telle couche peut être associé à une autre feuille de verre, emprisonnant entre elles un espace d'air, pour constituer un vitrage double isolant.

Des vitrages portant des revêtements transparents et présentant des propriétés de basse émissivité sont connus. Ils peuvent être constitués par exemple d'un support de verre et d'une mince couche d'oxyde métallique, telle qu'une couche d'oxyde d'étain dopé, par exemple au fluor, ou bien une couche d'oxyde d'indium dopé à l'étain (ITO).

Ces couches peuvent être obtenues par différents procédés, procédés sous vide (évaporation thermique, pulvérisation cathodique) ou par pyrolyse de composés métalliques sous forme de solution, de poudre ou de vapeur, projetés sur le substrat chauffé à température élevée. Dans ce cas, les composés, au contact du verre chauffé à température élevée, se décomposent et s'oxydent pour former une couche d'oxyde métallique.

Les couches, telles qu'une couche d'oxyde d'étain dopé au fluor ou une couche d'ITO, présentent des propriétés satisfaisantes pour être utilisées, notamment dans des vitrages bas émissifs.

Les propriétés optiques et électriques de ces couches les rendent aussi utilisables pour former des vitrages d'automobile, par exemple des vitrages chauffants, notamment des pare-brise, et comme substrats dans des produits particuliers comme des dispositifs opto-électroniques tels que des cellules photovoltaïques et des dispositifs d'affichage à cristaux liquides.

Cependant, aux épaisseurs nécessaires à l'obtention de propriétés électroniques intéressantes, les couches sont colorées en réflexion. Ainsi, les couches d'oxyde d'étain dopé au fluor et les couches d'ITO, d'une épaisseur de 180 nm, sont bleues en réflexion et celles ayant une épaisseur de 360 nm sont vertes.

Cette couleur peut ne pas plaire ou ne pas être adaptée à l'utilisation envisagée. En outre, de légères variations d'épaisseur des couches entraînent des irrégularités de couleur (iridescence).

Pour éliminer ou réduire cette coloration en réflexion ou ces irisations, il a été proposé de déposer sur le substrat en verre, avant de former la couche conductrice, une couche dite intermédiaire ou sous-couche, dont l'épaisseur géométrique et l'indice de réfraction sont tels que l'association des couches intermédiaire et conductrice forme une structure de couleur neutre en réflexion.

On règle l'indice de réfraction en mélangeant un oxyde à bas indice de réfraction comme Al₂O₃ (n = 1,65) avec un oxyde à haut indice de réfraction comme TiO₂, SnO₂, In₂O₃ et ZnO.

Ces couches intermédiaires d'indice de réfraction et d'épaisseur géométrique spécifiques permettent d'éliminer ou de réduire d'une manière importante la couleur observée en réflexion de la couche conductrice. En ce qui concerne les irisations, dues aux variations d'épaisseurs dans la couche conductrice, bien qu'elles soient réduites notablement par la présence de cette couche intermédiaire, on peut cependant encore observer des irisations sous forme de bandes approximativement parallèles dont le pas est, certes, plus grand que lorsque le produit ne comprend pas de couche intermédiaire entre le substrat en verte et la couche conductrice, mais qui sont cependant non appropriées pour un produit de bonne qualité.

Il est par ailleurs connu du brevet GB-950 533 des couches à base d'oxyde d'aluminium ou de mélange d'oxydes d'aluminium et de titane. Ces couches sont déposées sur des substrats du type substrat en quartz afin de constituer des revêtements diffusant la lumière. La technique de dépôt consiste à réduire l'oxyde ou les oxydes en poudre, puis à mettre la poudre en suspension, suspension dont on recouvre le substrat avant de le chauffer à haute température.

On sait former ces couches par pyrolyse de composés métalliques projetés sur le substrat de verte, porté à température élevée, à partir de solution dans des solvants organiques.

Mais l'utilisation de solvants organiques posent des problèmes, en particulier de pollution.

Pour éviter ces problèmes, on a donc cherché à former des couches anticouleur ou antiiridescentes par pyrolyse des composés métalliques sous forme de poudre.

Il est déjà connu de la demande de brevet FR-A-2 317 241 de déposer des couches d'oxydes métalliques sur des substrats verriers par une technique de pyrolyse de composés organo-métalliques sous forme pulvérulente, notamment des oxydes du type oxyde de chrome, fer, cobalt, aluminium ou indium.

La présente invention a pour objet la formation, par pyrolyse de poudre sur un substrat en verte, d'un film mince transparent présentant une bonne adhérence au verte, notamment un film à base d'oxyde d'aluminium et en particulier un film formé d'un mélange d'oxyde à bas indice de rétraction comme Al₂O₃ et d'oxyde à haut indice de réfraction comme SnO₂, ZnO, TiO₂, In₂O₃, et pouvant servir de couche intermédiaire entre le substrat en verte et une couche transparente d'oxyde métallique, notamment conductrice, pour former un produit qui n'a pas les inconvénients précités, et notamment qui présente une couleur neutre en réflexion et pas d'irisations.

L'invention a aussi pour objet des produits comprenant un substrat en verre et une mince couche transparente intermédiaire telle que mentionnée précédemment, et, en outre, une couche transparente conductrice, ces produits présentant des caractéristiques de transparence et de conductivité électrique appropriées pour former des vitrages chauffants, des vitrages bas émissifs, des substrats pour des dispositifs opto-électroniques, des vitrages à alarme incorporée.

Le procédé selon l'invention pour former une couche à base d'oxyde d'aluminium consiste à projeter, sur un support en verre chauffé à une température inférieure à sa température de ramollissement au moins un composé organique de l'aluminium qui se décompose thermiquement au contact du verre chaud et s'oxyde pour former ladite couche. Le procédé se caractérise en ce qu'on projette, sur le support au moins un composé en poudre contenant un dérivé organométallique de l'aluminium ayant au moins une fonction alcoolate ou au moins une fonction β-dicétone.

Comme composé de l'aluminium, on peut utiliser, par exemple du triisopropylate d'aluminium, du tri-n-butylate d'aluminium, du tri-ter-butylate d'aluminium, du triéthylate d'aluminium ou de l'acétylacétonate d'aluminium.

L'invention propose de former la couche à base d'oxyde d'aluminium à partir du composé d'aluminium en poudre mélangé avec un autre composé organométallique en poudre apte à former sur le substrat en verre, par pyrolyse, un oxyde à haut indice de réfraction, du type oxyde d'étain, de zinc, d'indium, de titane, en vue d'obtenir sur le verre une couche mixte d'indice de réfraction intermédiaire entre celui de l'oxyde d'aluminium et celui des autres oxydes.

Comme composés du zinc, sous forme de poudre, décomposables à la température du substrat, utilisables dans l'invention, on peut citer, par exemple, de l'acétate de zinc et de l'acétylacétonate de zinc.

Comme composés de l'indium, on peut citer l'acétylacétonate d'indium et le formiate d'indium. En particulier, du formiate d'indium, approprié pour l'invention, est décrit dans les demandes de brevet européen EP-A-192 009 et EP-A-324 664.

Les composés de l'étain utilisables pour la réalisation de l'invention sont des composés organiques, qui, de préférence, ne contiennent pas de chlore. En effet, les dérivés chlorés sont connus pour former du voile. Des composés de l'étain utilisables sont par exemple l'oxyde de dibutylétain (DBTO) et le difluorure de dibutylétain (DBTF).

Comme composés du titane, on peut utiliser du titanate de méthyle ou de l'acétylacétonate de titane.

Le rendement de pyrolyse dépend notamment de la quantité de composés et de leur granulométrie.

Avantageusement, le composé de l'aluminium est formé de poudre de granulométrie d₉₀ inférieure à 12 »m. Comme il est bien connu, le terme "d₉₀" signifie que 90 % des particules ont un diamètre inférieur à la valeur indiquée. Une telle granulométrie pour le composé de l'aluminium, présente de l'intérêt car la poudre a une bonne coulabilité et cela la rend utilisable dans un procédé de pyrolyse à poudre.

Les composés de l'étain ont de préférence, une granulométrie telle que le d₉₀ soit inférieur à 21 »m et même 20 »m.

En ce qui concerne les composés de l'indium et du zinc, la granulométrie est, de préférence, telle que leur d₉₀ soit inférieur à environ 21 »m.

Le mélange de poudres, utiles pour former la couche selon l'invention, par pyrolyse, comprend avantageusement de 20 à 90 % de composé d'aluminium et de 10 à 80 % de composé des autres métaux.

En particulier, pour former la couche d'Al₂O₃-SnO₂, on utilise, de préférence, de 40 à 90 % en poids de composé de l'aluminium et de 10 à 60 % en poids de composé de l'étain.

Avantageusement, pour former la couche d'Al₂O₃-ZnO, le mélange contient de 40 à 60 % en poids de composé du zinc.

Pour une couche d'Al₂O₃-In₂O₃, on peut utiliser avantageusement un mélange de poudres contenant de 25 % à 40 % de composé de l'indium.

En contrôlant la quantité des composés métalliques du mélange de poudres, on peut adapter l'indice de réfraction de la couche finale en fonction de l'utilisation souhaitée. On peut ainsi obtenir des couches ayant un indice de réfraction compris entre 1,70 et 1,85.

La présence des composés particuliers selon l'invention permet d'obtenir, sur le substrat en verre, par pyrolyse de poudre, une couche qui adhère bien au verre, qui est homogène et a une épaisseur très uniforme. Selon l'invention, on peut obtenir des couches ayant une épaisseur comprise entre 50 nm et 120 nm et notamment de l'ordre de 80 nm.

Les couches d'oxydes obtenues par le procédé selon l'invention ont, en outre, un coefficient d'absorption de la lumière faible, inférieur à 3 %.

Les couches minces d'oxydes selon l'invention peuvent être obtenues dans les conditions de fabrication industrielle du substrat de verre. Ceci constitue un avantage important. En effet, les verres qui portent un revêtement transparent semi-conducteur d'oxyde métallique, utiles pour former des vitrages tels que ceux mentionnés précédemment sont avantageusement fabriqués industriellement sur la ligne de production du verre lui-même.

Dans le cas du verre "float", le ruban de verre se déplace à des vitesses de défilement pouvant varier entre 3 et 25 m/mn. Des procédés de formation de ces couches et des dispositifs pour la mise en oeuvre de ces procédés ont été mis au point pour permettre d'obtenir les couches semi-conductrices d'oxydes métalliques souhaitées sur du verre se déplaçant à de telles vitesses. Les sous-couches d'épaisseur et d'indice de réfraction spécifiques, prévues pour former, avec la couche semi-conductrice, une structure de couleur neutre en réflexion et sans irisations, doivent donc pouvoir être aussi formées sur la ligne de production du verre, c'est-à-dire en tenant compte de la vitesse de défilement du ruban de verre, de sa température et des dispositifs utilisés habituellement pour la formation des couches semi-conductrices d'oxydes métalliques.

Le substrat peut être formé d'un verre silico-sodo-calcique utilisé classiquement pour les vitrages automobiles et pour les bâtiments. Il peut s'agir d'un verre clair, c'est-à-dire non coloré, présentant une transmission lumineuse importante, par exemple supérieure à 90 % sous une épaisseur de 4 mm. Il peut s'agir aussi, d'un verre coloré dans sa masse apte à procurer un confort d'été accru pour les passagers du véhicule ou du local équipé de tels verres, du fait de sa transmission énergétique réduite. D'une manière générale, pour des vitrages pour automobiles par exemple, on choisit le verre, constituant le substrat, pour respecter les réglementations, c'est-à-dire un ensemble verre et couche ayant une transmission lumineuse (TL) d'au moins 75 % ou 70 % suivant les législations.

Comme verre coloré, on peut utiliser du verre dit "TSA" contenant Fe₂O₃ dans des proportions pondérales de l'ordre de 0,55 à 0,62 %, FeO pour environ 0,11 à 0,16 %, ce qui conduit à un rapport Fe²⁺/Fe³⁺ de l'ordre de 0,19 à 0,25, CoO pour moins de 12 ppm et même de préférence pour moins de 10 ppm.

Il en résulte des propriétés, par exemple, pour une épaisseur de 3,85 mm, de transmission lumineuse (T_{L}) élevée voisine de 78 %, (illuminant D65), un facteur énergétique de transmission (T_{E}) relativement bas et voisin de 60, ce qui conduit à un rapport T_{L}/T_{E} de l'ordre de 1,30.

On peut aussi utiliser comme verre coloré, en particulier lorsque la réglementation n'impose q'une transmission lumineuse de 70 %, un verre un peu plus coloré que le "TSA", mais présentant par contre une transmission lumineuse un peu plus faible, à savoir un verre "TSA²⁺".

Ce verre "TSA²⁺" est coloré par les mêmes oxydes que précédemment mais dans des proportions légèrement différentes.

Ainsi, les proportions d'oxydes métalliques sont les suivantes :
- Fe₂O₃: : approximativement compris entre 0,75 et 0,90 %
- FeO: : approximativement compris entre 0,15 et 0,22 % soit Fe²⁺/Fe³⁺ = 0,20 environ
- CoO: : inférieur à 17 ppm et même de préférence inférieur à 10 ppm
Il en résulte pour ce verre "TSA²⁺", en 3,85 mm d'épaisseur, les propriétés suivantes :
- T_{L}: : de l'ordre de 72 %
- T_{E}: : de l'ordre de 50 %
ce qui conduit à un rapport T_{L}/T_{E} de l'ordre de 1,40 ou 1,50.

Les couches d'Al₂O₃-SnO₂, Al₂O₃-TiO₂, Al₂O₃-ZnO ou Al₂O₃-In₂O₃, obtenues selon l'invention sont particulièrement utiles dans des produits comprenant un substrat en verre et une mince couche transparente semi-conductrice d'oxyde métallique, pour former des vitrages transparents chauffants ou bas émissifs. Les couches d'oxydes selon l'invention sont, alors, des sous-couches, jouant le rôle d'une couche appelée couche anticouleur, qui forme, avec la couche semi-conductrice, une structure de couleur neutre en réflexion et ne présentant pas d'irisations ou d'ondulations colorées.

Différentes couches semi-conductrices peuvent être déposées sur les couches d'Al₂O₃-SnO₂, Al₂O₃-TiO₂, Al₂O₃-ZnO ou Al₂O₃-In₂O₃, selon l'invention. Ces couches peuvent être notamment des couches d'oxyde d'étain dopé au fluor (SnO₂ : F) ou bien des couches d'oxyde d'indium dopé à l'étain (ITO), ou bien encore des couches d'oxyde de zinc dopé à l'indium ou à l'aluminium, comme indiqué précédemment.

Les couches de SnO₂ : F et ITO peuvent être avantageusement obtenues par pyrolyse de poudres. Ainsi, on peut fabriquer les couches d'oxyde d'étain dopé au fluor à partir d'oxyde de dibutylétain (DBTO) en poudre et d'acide fluorhydrique anhydre gazeux, comme il est décrit dans le brevet français 2 380 997, à partir de difluorure de dibutylétain (DBTF) éventuellement, en mélange avec du DBTO comme décrit dans le document EP-A 178 956 ou EP-A-039 256. En ce qui concerne les couches d'ITO, on peut les obtenir par exemple à partir de formiate d'indium et d'un composé de l'étain comme le DBTO comme décrit dans le document EP-A-192 009.

On peut aussi obtenir les couches semi-conductrices de SnO₂ : F par pyrolyse en phase gazeuse, notamment à partir d'un mélange de composés d'étain comme (CH₃)₂ SnCl₂, (C₄H₉)₂ SnCl₂, Sn (C₂H₅)₄ et de composés organofluorés tels que CCl₂F₂, CHClF₂ et CH₃CHF₂ comme décrit dans le brevet EP-A-027 403 ou bien encore à partir de monobutyltrichloroétain et un composé de formule x CHF₂ tel que le chlorodifluorométhane mentionné dans le brevet EP-A-121 459.

Les couches d'oxyde de zinc dopé à l'indium ou à l'aluminium peuvent être obtenues par pyrolyse en phase vapeur, à partir de diéthylzinc ou d'acétate de zinc et de triéthylindium, chlorure d'indium ou triéthylaluminium, chlorure d'aluminium, comme décrit dans la demande de brevet EP-A-385 769.

Les couches de SnO₂ : F peuvent aussi être obtenues en phase liquide à partir d'acétylacétonate d'étain ou de diméthylétain-2-propionate dans des solvants organiques appropriés comme décrits notamment dans le brevet français 2 211 411.

Avec des couches d'oxydes selon l'invention, d'une épaisseur comprise entre 80 nm et 120 nm, associées à une couche semi-conductrice d'oxyde métallique, telle que mentionnée précédemment et ayant une épaisseur interférentielle (100 à 800 nm), on peut obtenir une structure de couleur neutre en réflexion et ne présentant pas d'irisations ou d'ondulations telles que décrites précédemment, et qui, par conséquent, peut être utile pour former des vitrages chauffants, notamment pour automobile ou des vitrages bas émissifs, notamment pour le bâtiment. En particulier, lorsque la couche semi-conductrice des vitrages bas émissifs est constituée par une couche de SnO₂ : F, ces vitrages présentent une émissivité inférieure ou égale à 0,25 pour une épaisseur de la couche semi-conductrice supérieure ou égale à 300 nm.

La neutralité optique en réflexion de la structure formée par une sous-couche d'Al₂O₃-SnO₂, d'Al₂O₃-TiO₂, d'Al₂O₃-In₂O₃ ou Al₂O₃-ZnO et la couche semi-conductrice dépend, comme il est connu, de l'indice de réfraction et de l'épaisseur géométrique de la sous-couche.

La neutralité optique en réflexion se définit par la longueur d'onde dominante en réflexion et par sa pureté.

La longueur d'onde dominante, mesurée par spectrophotométrie, est déterminée, en fonction d'un illuminant ; l'illuminant D₆₅ est habituellement utilisé pour le bâtiment et l'illuminant A pour l'automobile.

Dans l'invention, on a choisi la pureté la plus faible possible comme critère pour obtenir la meilleure neutralité optique en réflexion.

On a pu obtenir des vitrages selon l'invention, comprenant une couche d'oxydes selon l'invention et particulièrement une couche d'Al₂O₃-SnO₂ et une couche semi-conductrice d'oxyde métallique présentant une pureté inférieure à 10 %, et même inférieure à 5 %.

On pense que cette neutralité optique en réflexion est due à l'aspect homogène des couches d'oxydes obtenues selon l'invention, à partir d'un mélange particulier de composés spécifiques et par pyrolyse de poudre.

Pour former sur un substrat de verre les couches intermédiaires selon l'invention, par pyrolyse de poudre, on peut utiliser différents dispositifs connus, tels que ceux décrits dans les demandes de brevet européen EP-A-6 064, 125 153, 130 919, 188 962, 189 709, 191 258, 329 519.

D'une manière générale, on utilise une buse de distribution, située au dessus du substrat de verre chaud à traiter, en particulier un ruban de verre en mouvement tel que du verre flotté. Le ruban de verre peut défiler entre 3 et 25 m/mn. Cette buse comprend une cavité s'étendant sur toute sa longueur et se termine par une fente. La cavité est alimentée, d'une façon homogène, sur toute sa longueur, en mélange de poudres, en suspension dans un gaz porteur. La poudre sort de la fente de la buse et se pyrolyse sur la surface chaude du verre en mouvement.

Le ruban de verre est à une température inférieure à la température de ramollissement du verre, température qui dépend de sa composition. Elle est généralement comprise entre 500°C et 750°C.

Les exemples suivants non limitatifs illustrent l'invention. Dans ces exemples, pour la réalisation des couches selon l'invention, on a utilisé de l'air comme gaz vecteur. Le substrat est du verre flotté de 4 mm d'épaisseur, chauffé à une température de 650 à 700°C. Les quantités de poudres utilisées sont ajustées pour que le rendement de pyrolyse, mentionné précédemment, soit le plus élevé possible.

### EXEMPLE 1

On forme une couche d'Al₂O₃-SnO₂ à partir d'un mélange de poudres d'acétylacétonate d'aluminium (90 % en poids) et de difluorure de dibutylétain (10 % en poids).

Le support de verre portant la couche d'Al₂O₃-SnO₂ passe dans une étenderie de recuisson et, après refroidissement, il est découpé.

On mesure par ellipsométrie l'épaisseur et l'indice de réfraction de la couche.

La couche a une épaisseur de 80-100 nm. Son indice de réfraction est de 1,70.

### EXEMPLE 2

On forme, comme précédemment, une couche d'Al₂O₃-SnO₂ à partir d'un mélange de difluorure de dibutylétain en poudre (20 % en poids) ayant une granulométrie telle que d₉₀ est inférieur à 15 »m et de triisopropylate d'aluminium (80 % en poids) en poudre, de granulométrie d₉₀ < 12 »m.

La couche obtenue a une épaisseur de 100 - 105 nm et un indice de réfraction de 1,73 ± 0,01.

### EXEMPLE 3

La couche est formée à partir d'un mélange de difluorure de dibutylétain en poudre de granulométrie telle que d₉₀ est inférieur à 15 »m (22 % en poids) et de triisopropylate d'aluminium en poudre de granulométrie d₉₀ < 12 »m (78 % en poids).

La couche obtenue a une épaisseur de 105-110 nm et un indice de réfraction de 1,75 ± 0,01.

### EXEMPLE 4

A partir d'un mélange de poudres d'oxyde de dibutylétain de granulométrie d₉₀ < 7 »m représentant 50 % en poids et de triisopropylate d'aluminium de granulométrie d₉₀ < 12 »m représentant 50 % en poids du mélange, on forme sur un support de verre une couche d'Al₂O₃-SnO₂ ayant une épaisseur de 100-110 nm et un indice de réfraction de 1,75 ± 0,01.

### EXEMPLE 5

On utilise, pour former une couche d'Al₂O₃-SnO₂, un mélange de poudres de DBTO ( oxyde de dibutylétain ) de granulométrie telle que d₉₀ est inférieur à 20 »m et de triisopropylate d'aluminium (IPA) de granulométrie d₉₀ < 12 »m.

Le mélange contient 20 % en poids de DBTO et 80 % d'IPA.

On obtient une couche d'une épaisseur de 90 nm et d'un indice de réfraction de 1,73 ± 0,01.

L'indice de réfraction ne varie pas après un réchauffage de la couche à 650°C, comme à l'exemple 1.

L'absorption lumineuse de l'ensemble verre/couche est de 1,5 %.

### EXEMPLE 6

On forme dans les conditions indiquées précédemment, une couche d'Al₂O₃-ZnO sur un support verre flotté d'une épaisseur de 4 mm à partir d'un mélange de poudres d'acétate de zinc (d₉₀ inférieur à 21 »m) et de triisopropylate d'aluminium (d₉₀ inférieur à 12 »m), à raison de 80 % en poids d'acétate de zinc et 20 % en poids du composé d'aluminium.

L'épaisseur de la couche est de 100-105 nm et l'indice de réfraction est de 1,78 ± 0,01.

### EXEMPLE 7

On forme une couche d'Al₂O₃-ZnO à partir d'un mélange de poudres comme à l'exemple 6, avec 60 % en poids d'acétate de zinc et 40 % en poids de triisopropylate d'aluminium.

L'épaisseur de la couche est de 115 nm et son indice de réfraction de 1,76.

### EXEMPLE 8

Sur la couche d'Al₂O₃-SnO₂, obtenue à l'exemple 5 (épaisseur 90 nm et indice de réfraction 1,73 ± 0,01), réchauffée à 650°C, on forme une couche de SnO₂ : F par pyrolyse de difluorure de dibutylétain (DBTF) en poudre pour obtenir une couche d'une épaisseur de 360 nm. La couche de SnO₂ : F présente un indice de réfraction de 2,0 environ. Son émissivité est de 0,23.

Le produit ne présente pas d'irisations.

On mesure le coefficient de réflexion R_{L} du produit portant les deux couches (sous couche d'Al₂O₃-SnO₂ et couche de SnO₂ : F) pour l'illuminant D₆₅.Il est de 12,5 %.

La longueur d'onde dominante en réflexion, déterminée par spectrophotométrie, en fonction de l'illuminant D₆₅ (habituellement utilisé pour les vitrages destinés aux bâtiments) est de 475 nm et sa pureté est de 4,5 %.

### EXEMPLE 9

Sur la sous-couche d'Al₂O₃-SnO₂, formée à l'exemple 4 (épaisseur 100-110 nm et indice de réfraction de 1,75 ± 0,01) réchauffée à 650°C, on forme une couche de SnO₂ dopé au fluor (SnO₂ : F) par pyrolyse de difluorure de dibutylétain (DBTF) en poudre pour obtenir une couche de 360 nm. La couche de SnO₂ : F a un indice de réfraction de 2,0 environ et une émissivité de 0,23.

Le produit ne présente pas d'irisations.

Le coefficient de réflexion lumineuse, pour l'illuminant D₆₅, est de 12,5 %.

La longueur d'onde dominante en réflexion, déterminée en fonction de l'illuminant D₆₅ est de 488 nm et sa pureté de 5,8 %.

### EXEMPLE 10

On forme une couche d'Al₂O₃-In₂O₃ à partir d'un mélange de 30 % en poids de formiate d'indium (d₉₀ inférieur à 21 »m) et de 70 % en poids de triisopropylate d'aluminium (d₉₀ inférieur à 12 »m).

On obtient une couche d'une épaisseur de 95 nm et d'indice de réfraction de 1,77 ± 0,01.

L'absorption lumineuse pour l'illuminant D₆₅, est de 1,80 %.

### EXEMPLE 11

La couche d'Al₂O₃-In₂O₃ est formée à partir des mêmes poudres que celles de l'exemple 10. Le mélange contient 40 % en poids de formiate et 60 % en poids de composé de l'aluminium.

L'épaisseur de la couche est de 90 nm.

L'indice de réfraction est de 1,84 ± 0,01.

Avantageusement, selon l'invention, on réalise pratiquement simultanément le dépôt le l'empilement formé par la sous-couche d'oxydes à base d'Al₂O₃ et de la couche semi-conductrice.

Pour cela, on dispose deux buses, telles que décrites précédemment, à une distance l'une de l'autre de 20 cm environ. La distance entre le verre et la buse est de 10 cm environ. Le verre est à une température de 650°C environ et l'air est utilisé comme gaz vecteur.

La distance entre les deux buses a été déterminée avec soin. En effet, si les deux buses sont trop rapprochées, c'est-à-dire à une distance inférieure à 20 cm l'une de l'autre, les jets d'air et de poudre s'interpénètrent. Si les deux buses sont trop éloignées, à une distance très supérieure à 20 cm, le verre se refroidit trop vite entre les deux dépôts et on obtient une couche présentant des propriétés moins bonnes.

D'une manière générale, on pense que la distance entre les deux buses doit être égale au double de la distance verre-buse.

On a réalisé un empilement constitué d'une première couche d'Al₂O₃-SnO₂ et d'une deuxième couche de SnO₂ : F, de basse émissivité, avec cette installation à deux buses.

On utilise la première buse pour projeter un mélange de poudres de triisopropylate d'aluminium et d'oxyde de dibutylétain.

Avec la deuxième buse, on projette du difluorure de dibutylétain (DBTF) pour obtenir la couche de SnO₂ : F.

### EXEMPLE 12

Pour former la sous-couche d'Al₂O₃-SnO₂, on utilise un mélange de 40 % en poids de DBTO (d₉₀ < 7 »m) et de 60 % en poids de triisopropylate d'aluminium.

On obtient une couche d'une épaisseur de 90 + 10 nm et d'indice de réfraction de 1,74 ± 0,01.

Cette sous-couche est recouverte immédiatement de la couche de SnO₂ : F en projetant sur le support de verre du difluorure de dibutylétain (DBTF). On obtient une couche de 360 nm d'épaisseur.

Le coefficient de réflexion lumineuse du produit obtenu est de 12,3 % pour l'illuminant D₆₅.

La longueur d'onde dominante en réflexion est de 488 nm et sa pureté de 4,24 %.

La couche de SnO₂ : F présente une émissivité de 0,23.

### EXEMPLE 13

On opère comme à l'exemple 12.

Pour former la sous-couche d'Al₂O₃-SnO₂, on utilise un mélange de 58 % en poids de DBTO (d₉₀ < 7 »m) et 42 % en poids de triisopropylate d'aluminium (d₉₀ < 12»m).

La couche obtenue a une épaisseur de 95 ± 10 nm et un indice de réfraction de 1,76 ± 0,01.

Cette sous-couche est immédiatement recouverte d'une couche de SnO₂ : F d'une épaisseur de 360 nm.

Le coefficient de réflexion lumineuse du produit obtenu pour l'illuminant D₆₅ est de 12,8 %. La longueur d'onde dominante en réflexion est de 478 nm et sa pureté est de 5,56 %.

La couche de SnO₂ : F présente une émissivité de 0,24.

Les produits obtenus aux exemples 8, 9, 12 et 13 ont une résistivité de l'ordre de 7 x 10⁻⁴ Ω.cm. Ces produits peuvent être avantageusement utilisés comme vitrages chauffants, notamment dans les automobiles.

Les produits obtenus selon l'invention sont résistants chimiquement, notamment aux acides.

La résistance chimique des verres portant une sous-couche d'oxydes selon l'invention et une couche semi-conductrice de SnO₂ : F a été déterminée en immergeant des échantillons de ces verres dans une solution normale d'acide chlorhydrique à 100°C et, aussi, dans une solution d'acide fluorhydrique à 20°C, formée par 7 ml d'une solution à 40 % de HF dilués dans un litre d'eau.

Dans tous les cas, on a constaté un début d'attaque par ces acides au bout de plus de 30 mn, ce qui permet de dire que ces verres ont une résistance chimique excellente.

Dans les exemples précédents, la couche semi-conductrice est formée d'oxyde d'étain dopé au fluor. Des vitrages présentant des propriétés analogues peuvent être obtenus, en utilisant une autre couche semi-conductrice, par exemple une couche d'oxyde d'indium dopé à l'étain (ITO). Une telle couche présente, en outre, l'avantage d'avoir une émissivité de 0,11 environ pour une épaisseur de 180 nm.

On a décrit des couches d'Al₂O₃ associées à ZnO, In₂O₃ ou SnO₂. Il est aussi possible de réaliser dans des conditions analogues, des couches d'Al₂O₃-TiO₂ présentant un indice de réfraction entre 1,70 et 1,85 et formant avec une surcouche semiconductrice, un empilement neutre en réflexion.

Les produits qui comprennent une couche d'oxydes selon l'invention et une couche semi-conductrice, comme décrit précédemment, et qui ne présentent pas de coloration génante du point de vue esthétique, peuvent être aussi utiles comme vitrages d'automobile, par exemple des vitrages chauffants, notamment pour former des pare-brise. Ils peuvent aussi servir de vitrages à alarme incorporée.

Dans ce cas, ces produits peuvent être associés à une feuille de polymère plastique, tel que du polyuréthane, disposée au contact de la couche semi-conductrice pour constituer un vitrage feuilleté à un seul support de verre. Les produits selon l'invention peuvent être aussi associés à une autre plaque de verre par l'intermédiaire d'une feuille de matière plastique tel que du polybutyralvinylique, du polyuréthane ou du polychlorure de vinyle, pour former un vitrage feuilleté à deux plaques de verre.

Pour l'alimentation en courant électrique de la couche semi-conductrice, ces vitrages comprennent des amenées de courant, telles que des clinquants en cuivre et/ou des bandes sérigraphiées à l'argent, disposées le long des bords supérieur et inférieur des vitrages. L'émail noir généralement déposé sur ces vitrages pour cacher, notamment, les amenées de courant, n'est pas dénaturé par la présence de la sous-couche.

D'autre part, les couches d'oxydes présentent une bonne adhérence sur le verre, ce qui favorise la bonne cohésion de ces ensembles verre, sous-couche, couche semi-conductrice et feuille de polymère.

Les produits comprenant une couche d'oxydes selon l'invention et une couche semi-conductrice, par exemple de SnO₂ : F ou d'ITO, peuvent subir l'étape de bombage sans inconvénients car ces couches, déposées par pyrolyse, sont résistantes mécaniquement.

Les couches d'oxydes, obtenues selon l'invention, qui sont transparentes et sont très uniformes du point de vue de l'épaisseur, sont aussi utiles dans des vitrages antireflets.

On a obtenu un tel vitrage en formant sur un substrat de verre d'indice de réfraction égale à 1,52, une couche d'Al₂O₃-SnO₂ obtenue à l'exemple 5. On a obtenu une couche d'indice de réfraction de 1,73 et d'épaisseur de 90 nm ; l'épaisseur optique de cette couche est égale à λ/4. Sur cette couche, on a formé, comme il est connu, une couche de TiO₂ par pyrolyse liquide, pour que son épaisseur optique soit égale à λ/2, puis une couche de SiO₂, par exemple par CVD plasma, dont l'épaisseur optique était de λ/4.

Le coefficient de réflexion lumineuse du vitrage était inférieur à 1 % par face traitée. La présence de la sous-couche de Al₂O₃-SnO₂ par suite de l'uniformité de son épaisseur, permet d'obtenir un coefficient de réflexion plus homogène sur tout le produit.

Les couches d'oxydes obtenues selon l'invention constituent, en outre, des couches barrière à la diffusion des ions alcalins. Les verres portant ces couches peuvent dont être utiles comme substrats dans des dispositifs opto-électroniques tels que des dispositifs d'affichage à cristaux liquides, dans lesquels la diffusion des ions alcalins, particulièrement le sodium, doit être évitée.

## Revendications

1. Procédé de formation d'une couche à base d'oxyde d'aluminium sur un substrat en verte, consistant à projeter sur ce substrat chauffé à une température inférieure à sa température de ramollissement, au moins un composé organique de l'aluminium qui se décompose thermiquement au contact du verte chaud et s'oxyde, **caractérisé en ce que** le composé organique de l'aluminium est en poudre et présente au moins une fonction alcoolate ou au moins une fonction β-dicétone et **en ce qu'**il est mélangé avec un autre composé organo-métallique également en poudre, apte à former sur le substrat en verte par pyrolyse, un oxyde à haut indice de réfraction, du type oxyde d'étain, de zinc, d'indium, de titane en vue d'obtenir une couche mixte d'indice de réfraction intermédiaire entre celui de l'oxyde d'aluminium et celui des autres d'oxydes d'étain, de zinc, d'indium, de titane.

2. Procédé selon la revendication 1, **caractérisé en ce que** le composé d'aluminium appartient au groupe suivant : triisopropylate d'aluminium, tri-n-butylate d'aluminium, tri-ter-butylate d'aluminium, triéthylate d'aluminium, acétylacétonate d'aluminium.

3. Procédé selon l'une des revendications précédentes, **caractérisé en ce que** le composé organique d'aluminium en poudre a une granulométrie telle que d₉₀ est inférieur à 12 »m.

4. Procédé selon l'une des revendications précédentes, **caractérisé en ce que** l'autre composé organométallique apte a former de l'oxyde d'étain, d'indium, de titane, de zinc, est respectivement de l'oxyde ou du difluorure de dibutylétain, de l'acétylacétonate ou du formiate d'indium, du titanate de méthyle ou de l'acétylacétonate de titane, de l'acétate ou de l'acétylacétonate de zinc.

5. Procédé conforme à l'une des revendications précédentes, **caractérisé en ce que** les composés en poudre d'étain, d'indium, de titane et de zinc, ont une granulométrie telle que d₉₀ est inférieur à 21 »m.

6. Procédé selon l'une des revendications précédentes, **caractérisé en ce que** le mélange contient de 20 à 90% en poids de composé d'aluminium et de 10 à 80% en poids de composé des autres métaux.

7. Procédé conforme à la revendication 6, **caractérisé en ce que** le mélange contient de 40 à 90% en poids de composé d'aluminium et de 10 à 60% de composé de l'étain.

8. Procédé conforme à la revendication 7, **caractérisé en ce que** le mélange contient de 40 à 60% en poids du composé du zinc et de 60 à 40% du composé de l'aluminium.

9. Procédé conforme à la revendication 8, **caractérisé en ce que** le mélange contient de 25 à 40% en poids de composé de l'indium et de 60 à 75% en poids du composé de l'aluminium.

10. Procédé conforme à l'une des revendications précédentes, **caractérisé en ce que** la température du verte est comprise entre 500 et 750°C.

11. Procédé conforme à l'une des revendications précédentes, **caractérisé en ce que** le support de verte défile à une vitesse de 3 à 25 m/min.

12. Procédé conforme à l'une des revendications précédentes, **caractérisé en ce qu'**on forme sur la couche à base d'oxyde d'aluminium une couche transparente conductrice d'oxyde métallique.

13. Procédé conforme à la revendication 12, **caractérisé en ce que** la couche conductrice d'oxyde métallique est une couche d'oxyde d'étain dopé au fluor, une couche d'oxyde d'indium dopé à l'étain, ou une couche d'oxyde de zinc dopé à l'aluminium ou à l'indium.

14. Procédé conforme à l'une des revendications 12 ou 13, **caractérisé en ce qu'**on forme la couche conductrice immédiatement après la couche à base d'oxyde d'aluminium.

15. Procédé conforme à la revendication 14, **caractérisé en ce qu'**on utilise deux buses de distribution, la première pour le mélange de poudres servant à former la couche à base d'oxyde d'aluminium et la deuxième pour la ou les poudres servant à former la couche conductrice, ces deux buses étant placées au-dessus du substrat de verte, à une distance l'une de l'autre de 20 cm environ et à une distance de 10 cm environ de la surface du substrat de verre.

16. Produit obtenu par le procédé conforme à l'une des revendications précédentes, comprenant un support de verte, la couche à base d'oxyde d'aluminium, et d'au moins un oxyde de zinc, d'indium, d'étain et de titane, ayant un indice de réfraction compris entre 1,70 et 1,85, et sur cette couche, une couche transparente conductrice d'oxyde métallique, l'ensemble des deux couches, couche à base d'oxyde d'aluminium et couche conductrice, constituant une structure neutre en réflexion, avec une pureté en réflexion, inférieure à 10%.

17. Produit conforme à la revendication 16, dans lequel la couche à base d'oxyde d'aluminium a une épaisseur comprise entre 50 nm et 120 nm et notamment de l'ordre de 80 nm.

18. Produit conforme à l'une quelconque des revendications 16 et 17, **caractérisé en ce que** la couche transparente conductrice d'oxyde métallique a une épaisseur comprise entre 100 nm et 800 nm, notamment supérieure ou égale à 300 nm.

19. Produit conforme à l'une des revendications 16 à 18, **caractérisé en ce que** la couche conductrice est une couche d'oxyde d'étain dopé au fluor ou une couche d'oxyde d'indium dopé à l'étain, ou une couche d'oxyde de zinc dopé à l'aluminium ou à l'indium.

20. Produit conforme à l'une des revendications 16 et 19, **caractérisé en ce qu'**il présente une absorption lumineuse inférieure à 3%.

21. Utilisation du produit conforme à l'une des revendications 16 à 20 comme vitrage bas-émissif, avec notamment une couche conductrice formée d'oxyde d'étain dopé au fluor présentant une émissivité inférieure ou égale à 0,25 pour une épaisseur supérieure ou égale à 300 nm.

22. Utilisation du produit conforme à l'une des revendications 16 à 20 comme vitrage chauffant dans lequel la couche conductrice d'oxyde métallique présente une résistivité d'environ 7 x 10⁻⁴Ω.cm.

23. Utilisation du produit conforme à la revendication 23, de manière à ce que le vitrage comprenne, au contact de la couche conductrice, une feuille de polymère plastique, notamment du polyuréthane, de PVB, de PVC, et des amenées de courant disposées le long des bords supérieur et inférieur du vitrage.

24. Vitrage anti-reflets obtenu par le procédé conforme à l'une des revendications 1 à 15 comprenant un support de verte, une couche à base d'oxyde d'aluminium et d'au moins un oxyde de zinc, d'indium, d'étain et de titane, d'une épaisseur de l'ordre de 90 nm et ayant un indice de réfraction de l'ordre de 1,73 une couche d'oxyde de titane et une couche de silice, les épaisseurs optiques des couches étant respectivement de λ/4, λ/2 et λ/4.

## Claims

1. Process for the formation of a layer based on alumina on a glass substrate, consisting of spraying onto said substrate heated to a temperature below its softening point, at least one organic compound of aluminium, which thermally decomposes on contact with the hot glass and oxidizes, characterized in that the organic compound of aluminium is in powder form and has at least one alkoxide function or at least one β-diketone function and that it is mixed with another organometallic compound also in powder form able to form on the glass substrate, by pyrolysis, an oxide having a high refractive index of the tin, zinc, indium or titanium oxide type with a view to obtaining a mixed layer having a refractive index between that of the alumina and that of the other tin, zinc, indium or titanium oxides.

2. Process according to claim 1, characterized in that the aluminium compound belongs to the group consisting of aluminium triisopropylate, aluminium tri-n-butylate, aluminium tri-ter-butylate, aluminium triethylate and aluminium acetyl acetonate.

3. Process according to either of the preceding claims, characterized in that the organic compound of aluminium in powder form has a grain size such that d₉₀ is below 12 »m.

4. Process according to any one of the preceding claims, characterized in that the other organometallic compound able to form tin, indium, titanium or zinc oxide is respectively dibutyl tin oxide or difluoride, indium acetyl acetonate or formate, methyl titanate or titanium acetyl acetonate or zinc acetate or acetyl acetonate.

5. Process according to any one of the preceding claims, characterized in that the tin, indium, titanium and zinc compounds in powder form have a grain size such that d₉₀ is below 21 »m.

6. Process according to any one of the preceding claims, characterized in that the mixture contains 20 to 90% by weight of aluminium compound and 10 to 80% by weight of compound of other metals.

7. Process according to claim 6, characterized in that the mixture contains 40 to 90% by weight of aluminium compound and 10 to 60% by weight of tin compound.

8. Process according to claim 7, characterized in that the mixture contains 40 to 60% by weight of zinc compound and 60 to 40% by weight of aluminium compound.

9. Process according to claim 8, characterized in that the mixture contains 25 to 40% by weight of indium compound and 60 to 75% by weight of aluminium compound.

10. Process according to any one of the preceding claims, characterized in that the temperature of the glass is between 500 and 750°C.

11. Process according to any one of the preceding claims, characterized in that the glass support travels at a speed of 3 to 25 m/min.

12. Process according to any one of the preceding claims, characterized in that on the alumina-based layer is formed a conductive, transparent metal oxide layer.

13. Process according to claim 12, characterized in that the conductive metal oxide layer is a fluorine-doped tin oxide layer, a tin-doped indium oxide layer or an aluminium or indium-doped zinc oxide layer.

14. Process according to either of the claims 12 and 13, characterized in that the conductive layer is formed immediately after the alumina-based layer.

15. Process according to claim 14, characterized in that use is made of two distribution nozzles, the first for the mixture of powders used for forming the alumina-based layer and the second for the powder or powders used for forming the conductive layer, said two nozzles being positioned above the glass substrate at a distance from one another of approximately 20 cm and at a distance of approximately 10 cm from the glass substrate surface.

16. Product obtained by the process according to any one of the preceding claims, comprising a glass support, the alumina-based layer and at least one zinc, indium, tin or titanium oxide, having a refractive index between 1.70 and 1.85 and on said layer, a metal oxide, transparent conductive layer, the assembly of the two layers, namely the alumina-based layer and the conductive layer, constituting a structure which is neutral in reflection and having a reflection purity below 10%.

17. Product according to claim 16, wherein the alumina-based layer has a thickness between 50 and 120 nm and in particular approximately 80 nm.

18. Product according to either of the claims 16 and 17, characterized in that the conductive, transparent, metal oxide layer has a thickness between 100 and 800 nm, particularly equal to or greater than 300 nm.

19. Product according to any one of the claims 16 to 18, characterized in that the conductive layer is a fluorine-doped tin oxide layer or a tin-doped indium oxide layer, or an aluminium or indium-doped zinc oxide layer.

20. Product according to either of the claims 16 and 19, characterized in that it has a light absorption below 3%.

21. Use of the product according to any one of the claims 16 to 20 as a low-emissive glazing, with in particular a conductive layer formed from fluorine-doped tin oxide having an emissivity equal to or below 0.25 for a thickness equal to or above 300 nm.

22. Use of the product according to any one of the claims 16 to 20 as a heating glazing in which the conductive metal oxide layer has a resistivity of approximately 7 x 10⁻⁴Ω.cm.

23. Use of the product according to claim 23, in such a way that the glazing comprises, in contact with the conductive layer, a plastic polymer sheet, particularly of polyurethane, PVB or PVC, and current leads arranged along the upper and lower edges of the glazing.

24. Anti-reflection glazing obtained by the process according to any one of the claims 1 to 15 comprising a glass support, an alumina-based layer and at least one zinc, indium, tin and titanium oxide, having a thickness of approximately 90 nm and a refractive index of approximately 1.73, a titanium dioxide layer and a silica layer, the optical thicknesses of the layers being respectively λ/4, λ/2 and λ/4.

## Patentansprüche

1. Verfahren zur Herstellung einer Schicht auf der Grundlage von Aluminiumoxid auf einem Glassubstrat, welches darin besteht, daß auf das Substrat, das auf eine Temperatur unterhalb seiner Erweichungstemperatur erhitzt ist, wenigstens eine aluminiumorganische Verbindung gespritzt wird, die sich im Kontakt mit dem heißen Glas thermisch zersetzt und oxidiert, **dadurch gekennzeichnet, daß** die aluminiumorganische Verbindung pulverförmig ist und wenigstens eine funktionelle Alkoholatgruppe oder wenigstens eine funktionelle β-Diketongruppe besitzt **und daß** sie mit einer anderen, ebenfalls pulverförmigen metallorganischen Verbindung vermischt ist, die durch Pyrolyse auf dem Glassubstrat ein Oxid mit hohem Brechungsindex vom Typ des Zinn-, Zink-, Indium- und Titanoxids bilden kann, um eine gemischte Schicht mit einem Brechungsindex Zu erhalten, der zwischen dem des Aluminiumoxids und dem des anderen Zinn-, Zink-, Indium- und Titanoxids liegt.

2. Verfahren nach Anspruch 1, **dadurch gekennzeichnet, daß** die Aluminiumverbindung zu der aus Aluminiumtriisopropylat, Aluminiumtrinbutylat, Aluminiumtri*tert*.butylat, Aluminiumtriethylat und Aluminiumacetylacetonat bestehenden Gruppe gehört.

3. Verfahren nach einem der vorhergehenden Ansprüche, **dadurch gekennzeichnet, daß** die pulverförmige aluminiumorganische Verbindung eine solche Korngröße besitzt, daß d₉₀ kleiner als 12 »m ist.

4. Verfahren nach einem der vorhergehenden Ansprüche**, dadurch gekennzeichnet, daß** die andere metallorganische Verbindung, die das Zinn-, Zink-, Indium- und Titanoxid bilden kann, das Oxid oder Difluorid des Dibutylzinns, Indiumacetylacetonats oder -formiats, Methyltitanats oder Titanacetylacetonats bzw. Zinkacetats oder - acetylacetonats ist.

5. Verfahren nach einem der vorhergehenden Ansprüche, **dadurch gekennzeichnet, daß** die pulverförmigen Zinn-, Indium-, Titan- und Zinkverbindungen eine solche Korngröße besitzen, daß d₉₀ kleiner als 21 »m ist.

6. Verfahren nach einem der vorhergehenden Ansprüche, **dadurch gekennzeichnet, daß** das Gemisch 20 bis 90 Gew.% Aluminiumverbindung und 10 bis 80 Gew.% Verbindung von anderen Metallen enthält.

7. Verfahren nach Anspruch 6, **dadurch gekennzeichnet, daß** das Gemisch 40 bis 90 Gew.% Aluminiumverbindung und 10 bis 60 % Zinnverbindung enthält.

8. Verfahren nach Anspruch 7, **dadurch gekennzeichnet, daß** das Gemisch 40 bis 60 Gew.% Zinkverbindung und 60 bis 40 % Aluminiumverbindung enthält.

9. Verfahren nach Anspruch 8, **dadurch gekennzeichnet, daß** das Gemisch 25 bis 40 Gew.% Indiumverbindung und 60 bis 75 Gew.% Aluminiumverbindung enthält.

10. Verfahren nach einem der vorhergehenden Ansprüche, **dadurch gekennzeichnet, daß** die Glastemperatur 500 bis 750 °C beträgt.

11. Verfahren nach einem der vorhergehenden Ansprüche**, dadurch gekennzeichnet, daß** der Glasträger mit einer Geschwindigkeit von 3 bis 25 m/min durchläuft.

12. Verfahren nach einem der vorhergehenden Ansprüche, **dadurch gekennzeichnet, daß** auf der Schicht auf der Grundlage von Aluminiumoxid eine durchsichtige leitfähige Metalloxidschicht gebildet wird.

13. Verfahren nach Anspruch 12, **dadurch gekennzeichnet, daß** die leitfähige Metalloxidschicht eine mit Fluor dotierte Zinnoxid-, eine mit Zinn dotierte Indiumoxid- oder eine mit Aluminium oder Indium dotierte Zinkoxidschicht ist.

14. Verfahren nach Anspruch 12 oder 13, **dadurch gekennzeichnet, daß** die leitfähige Schicht unmittelbar nach der Schicht auf der Grundlage von Aluminiumoxid gebildet wird.

15. Verfahren nach Anspruch 14, **dadurch gekennzeichnet, daß** zwei Verteilungsdüsen verwendet werden, wobei die erste für das Pulvergemisch zur Bildung der Schicht auf der Grundlage von Aluminiumoxid und die zweite für das oder die Pulver zur Bildung der leitfähigen Schicht dient und diese beiden Düsen über dem Glassubstrat mit einem Abstand von etwa 20 cm untereinander und von etwa 10 cm zur Glassubstratoberfläche angeordnet sind.

16. Erzeugnis, welches durch das Verfahren nach einem der vorhergehenden Ansprüche hergestellt ist, umfassend einen Glasträger, die Schicht auf der Grundlage von Aluminiumoxid und wenigstens ein Zink-, Indium-, Zinn- und Titanoxid, mit einem Brechungsindex von 1,70 bis 1,85 und auf dieser Schicht eine durchsichtige leitfähige Metalloxidschicht, wobei der Aufbau aus den beiden Schichten, die Schicht auf der Grundlage von Aluminiumoxid und die leitfähige Schicht, eine unter einfallendem Licht neutrale Struktur bilden mit einem Farbreinheitsgrad unter einfallendem Licht von weniger als 10 %.

17. Erzeugnis nach Anspruch 16, in welchem die Schicht auf der Grundlage von Aluminiumoxid eine Dicke von 50 bis 120 nm und insbesondere von etwa 80 nm besitzt.

18. Erzeugnis nach Anspruch 16 oder 17, **dadurch gekennzeichnet, daß** die durchsichtige leitfähige Metalloxidschicht eine Dicke von 100 bis 800 nm und insbesondere von über oder gleich 300 nm besitzt.

19. Erzeugnis nach einem der Ansprüche 16 bis 18, **dadurch gekennzeichnet, daß** die leitfähige Schicht eine mit Fluor dotierte Zinnoxid-, eine mit Zinn dotierte Indiumoxid- oder eine mit Aluminium oder Indium dotierte Zinkoxidschicht ist.

20. Erzeugnis nach einem der Ansprüche 16 bis 19, **dadurch gekennzeichnet, daß** es eine Lichtabsorption von weniger als 3 % aufweist.

21. Verwendung des Erzeugnisses nach einem der Ansprüche 16 bis 20 als eine Verglasung mit niedrigem Emissionsvermögen und mit insbesondere einer aus mit Fluor dotiertem Zinnoxid gebildeten leitfähigen Schicht, die bei einer Dicke von wenigstens 300 um einen Emissionskoeffizienten von höchstens 0,25 aufweist.

22. Verwendung des Erzeugnisses nach einem der Ansprüche 16 bis 20 als beheizbare Verglasung, in welcher die leitfähige Metalloxidschicht einen spezifischen Widerstand von etwa 7 · 10⁻⁴ Ω·cm aufweist.

23. Verwendung des Erzeugnisses nach Anspruch 23 derart, daß die Verglasung im Kontakt mit der leitfähigen Schicht eine Kunststoffolie, insbesondere aus Polyurethan, PVB oder PVC, und Stromzufuhrleitungen umfaßt, die entlang des oberen und unteren Randes der Verglasung angeordnet sind.

24. Blendungsfreie Verglasung, die gemäß dem Verfahren nach einem der Ansprüche 1 bis 15 hergestellt ist, umfassend einen Glasträger, eine Schicht auf der Grundlage von Aluminiumoxid und aus wenigstens einem Zink-, Indium-, Zinn- und Titanoxid mit einem Brechungsindex von etwa 1,73, eine Titanoxidschicht und eine Siliciumoxidschicht, wobei die optischen Dicken der Schichten /4, /2 bzw. /4 betragen.
